# EUROPEAN PATENT APPLICATION

(11) **EP 4 797 108 A1**
(43) Date of publication of application: **26.08.2026**
(21) Application number: 26157235.8
(22) Date of filing: 09.02.2026
(51) Int. Cl.: G06F 15/173

(54) **METHOD AND DEVICES OF COMMUNICATION IN A COMPUTING NETWORK USING SWITCH PROXY**

(30) Priority: 20.02.2025 US 202563761149 P
(71) Applicant: Marvell Asia Pte Ltd, Singapore 369522 (SG)
(72) Inventor: Burla, Satananda, Milpitas, CA 95035 (US); Kalderon, Michal, Ramat Hasharon (IL)
(74) Representative: Grünecker Patent- und Rechtsanwälte PartG mbB

(57) **Abstract**

Methods for communicating in a computing network and corresponding devices are described. An example method of communicating in a computing network includes, by a scale-up switch, receiving a command packet generated by a compute component of a computing network, the command packet including a destination identifier and a memory address. The method further includes identifying a destination compute component based on the command packet received and determining if the destination compute component is in a scale-up network or a scale-out network. Responsive to the destination compute component being in the scale-out network, the method includes translating the command packet received into a network message, the translating including mapping the destination identifier to a network address and the memory address to a network resource index, and transmitting the network message to a scale-out fabric. Said communicating in the computing network can reduce demands upon the compute component and streamline network communication.

## Description

### RELATED APPLICATION

This application claims the benefit of U.S. Provisional Application No. 63/761,149, filed on February 20, 2025. The entire teachings of the above application are incorporated herein by reference.

### BACKGROUND

The rapid evolution of modern computing, including for applications such as artificial intelligence (Al)/machine learning (ML) training and inference-based computing for non-limiting examples, may redefine the landscape of computing and the underlying network infrastructure. Addressing challenges that workloads associated with such modern computing technologies impose on networking infrastructure may require innovative approaches.

### SUMMARY

According to some embodiments, compute components, e.g., accelerators such as graphics processing units (GPUs) or tensor processing units (TPUs), within a computing network can be configured to communicate with other compute components (a destination compute component) in a scale-up network or a scale-out network of the computing network. However, placing burdens associated with decision making in network communication (for example, determining whether to communicate over a scale-up interface or scale-out interface, whether to generate a corresponding scale-up message or a corresponding scale-out message, respectively, or a combination thereof) on the compute component can place significant strain upon the compute component and limit their computational capacity or efficiency.

An example embodiment is directed to a method of communicating in a computer network. The method comprises, by a scale-up switch, receiving a command packet generated by a compute component of a computing network. The compute component is communicatively coupled to the scale-up switch and the command packet includes a destination identifier and a memory address. The method further comprises, by the scale-up switch, identifying a destination compute component of the computing network based on the command packet received and determining if the destination compute component identified is in a scale-up network of the computing network or a scale-out network of the computing network of the computing network. Responsive to the destination compute component being in the scale-out network, the method further comprises, by the scale-up switch, translating the command packet received into a network message. The translating includes mapping the destination identifier to a network address and mapping the memory address to a network resource index. Further responsive to the destination compute component being in the scale-out network, the method further comprises, by the scale-up switch, transmitting the network message to a scale-out fabric of the scale-out network. The scale-out fabric is communicatively coupled to the scale-up switch.

The method can further comprise, by the scale-up switch and responsive to the destination compute component being in the scale-up network, transmitting the command packet to the destination compute component.

The method can further comprise by the scale-up switch, maintaining a mapping table, the mapping table enabling the mapping of the destination identifier to the network address and of the memory offset to the network resource index.

The method can further comprise, by a destination scale-up switch, receiving the network message from the scale-out fabric and mapping the network address to the destination identifier and the network resource index to the memory address. The method can further comprise, by the destination scale-up switch, performing an operation associated with the local identifier and the local address mapped.

The network address and the network memory key can be associated with memory accessible by the scale-out fabric. The method can further comprise by the scale-out fabric, executing an operation on the memory accessible by the scale-out fabric. The operation can be based on a portion of the network message transmitted. The method can further comprise, by the scale-out fabric, transmitting the network message to a destination compute component of the computing network via the memory accessible by the scale-out fabric.

The network address can include one or more of an endpoint address, a job identifier, and a process identifier. The network resource index can include one or more of a remote memory key and a memory offset.

The command packet can further include a command and the network message can further include a network command. Translating the command packet into the network message further can include mapping the command to the network command.

The network message can be formatted using a remote direct memory access (RDMA) protocol, the RDMA protocol including an ultra ethernet transport (UET) protocol or an RDMA over Converged Ethernet (RoCE) protocol as non-limiting examples.

The command packet can be formatted using an ultra accelerator link (UAL) protocol or an ethernet for scale-up networking (ESUN) protocol as non-limiting examples.

Another example embodiment can be directed to a scale-up switch comprising a processor configured to couple communicatively to a compute component of a scale-up network and to a scale-out fabric of a scale-out network. The scale-up network and the scale-out network being part of a computing network. The processor can be further configured to receive a command packet generated by the compute component. The command packet includes a destination identifier and a memory address. The processor can be further configured to identify a destination compute component of the computing network based on the command packet received and determine if the destination compute component is in a scale-up network or the scale-out network. The processor is further configured to, responsive to the destination compute component being in the scale-out network, translate the command packet received into a network message. The translating includes mapping the destination identifier into a network address and mapping the memory offset to a network resource index. The processor is further configured to, responsive to the destination compute component being in the scale-out network, transmit the network message to the scale-out fabric.

The scale-up switch can further comprise memory communicatively coupled to the processor. The memory can be configured to maintain a mapping table, the mapping table enabling the mapping of the destination identifier to the network address and of the memory offset to the network resource index. The network address can include one or more of an endpoint address, a job identifier, and a process identifier, and the network resource index can include one or more of a remote memory key and a memory offset.

The processor can be further configured to, responsive to the destination compute component being in the scale-up network, transmit the command packet to the destination compute component.

The command packet received can further include a command and wherein translating the command packet into the network message further includes mapping the command of the command packet into a network command.

The scale-up switch can be further configured to receive an inbound message from the scale-out fabric and to perform an operation based on the inbound message received. The processor can be further configured to translate the inbound message received. Translating the inbound message received can include mapping an address of the inbound message to a local identifier and mapping a resource index of the inbound message to a local address. The operation performed can be based on the local identifier and the local address mapped. The operation performed can comprise transmitting a representation of the inbound message translated to a destination compute component of the scale-up network. The destination compute component can be based on the local identifier and the local address mapped.

Another example embodiment can be directed to a hardware description language (HDL) design structure encoded on a machine readable data storage medium, said HDL design structure comprising elements that when processed in a computer-aided design system generates a machine-executable representation of a scale-up switch. The HDL design structure comprises a first communication module configured to couple communicatively to a compute component of a scale-up network, the scale-up network being part of a computing network. The HDL design structure further comprises a second communication module configured to couple communicatively to a scale-out fabric of a scale-out network, the scale-out fabric being part of the computing network. The HDL design structure further comprises a processing module communicatively coupled to the first communication module and the second communication module. The processing module is configured to receive a command packet generated by the compute component, the command packet including a destination identifier and a memory address, and to identify a destination compute component of the computing network based on the command packet received. The processing module is further configured to determine if the destination compute component is in the scale-up network or the scale-out network. Responsive to the destination compute component being in the scale-out network, the processor is further configure to translate the command packet received into a network message, the translating including mapping the destination identifier into a network address and mapping the memory offset to a network resource index, and to transmit the network message to the scale-out fabric.

The HDL design structure can further comprise a memory block communicatively coupled to the processing module. The memory block can be configured to maintain a mapping table. The processing module can be configured to map the destination identifier to the network address and the memory offset to the network resource index based on the mapping table.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a flow chart of an example embodiment of a method of communication in a computing network.
FIG. 2 illustrates schematically an example embodiment of a computing network.
FIG. 3 is a block diagram of an example embodiment of a scale-up switch.
FIG. 4 illustrates a block diagram of an example embodiment of a scale-up switch 414 that can be used for communicating in a computing network.
FIG. 5A illustrates a block diagram of an example computing network that can include an example embodiment of a scale-up switch configured for communicating in the computing network.
FIG. 5B illustrates a block diagram of another example computing network that can include example embodiments of scale up switches configured for communicating in the computing network.
FIGS. 6A and 6B illustrate example embodiments of mapping between a UAL command a UET packet and between a UET packet and a UAL command, respectively.

### DETAILED DESCRIPTION

A description of example embodiments follows.

According to some embodiments, a computing network may include at least scale-up networks and scale-out networks. In some embodiments, scale-up networking may focus upon connecting compute components that reside within a given computing group or cluster. The compute components may include graphics processing units (GPUs) or tensor processing units (TPUs) as non-limiting examples and the given computing group or cluster can be a rack, chassis, or a few racks in close proximity for non-limiting examples. According to some embodiments, scale-up networks may be defined by a proximity of the compute components, the proximity being such that the compute components may communicate using high-speed physical layer communication. Scale-up networks (or scale-up networking) may aim to optimize high-speed, low-latency communication within a localized environment. As used herein, scale-up communication can refer to communication using a scale-up protocol or to between devices in a scale-up network.

As used hereinbelow, an xPU may reference a computing component, including a GPU or a TPU as non-limiting examples. An xPU may also be referred to as an accelerator.

In some embodiments, scale-out network may focus on connecting groups, e.g., the scale-up networks, together over greater distances. Connecting over the greater distances may introduce challenges such as higher latency, congestion, and a need for more robust communication protocols. As used herein, scale-out communication can refer to communication using a scale-out protocol or to messages between devices in a scale-up network.

Efforts have been directed toward providing solutions for networking challenges, including challenges in developing scale-up and scale-out networks. As an example, a consortium initiative for scale-up networks, the Ultra Accelerator Link (UALink or UAL) consortium, has released a UALink specification, an open standard for communication between accelerators such as xPUs. For example, the UALink specification may provide communication protocols for die-to-die interconnects. As used herein, communication using UAL can be scale-up communication and can be referred to as a UAL command, UAL packet, or a UAL message.

Similarly, with respect to scale-out networking, the Ultra Ethernet Consortium (UEC) has released an Ultra Ethernet Transport (UET) specification, which may be an open and interoperable network specification for communication over scale-out networks and may be built upon existing ethernet technologies or protocols. As used herein, communication using UET can be scale-out communication and can be referred to as a UET message or a UET packet.

While example embodiments described hereinbelow may utilize UAL protocols for scale-up communication and UET protocols for scale-out communication, it should be understood that alternative protocols or methods for the scale-up and scale-out communication can also be utilized. Example alternative protocols can include, as non-limiting examples, ethernet for scale-up networking (ESUN) or remote direct memory access (RDMA) over converged ethernet (RoCE).

In some computing system architectures, each xPU may be connected to a network interface controller (NIC), for example, via a peripheral component interconnect express (PCIe) interface. The xPU may additionally be connected to a scale-up fabric. In such embodiments, an accelerator may be responsible for determining if a destination of a communication packet is within a scale-up or scale-out network and, accordingly, may need to implement logic for determining when and where to send data. For example, the xPU may send data to a scale-up fabric if a target or destination xPU is within a same group as the xPU (within a same scale-up network) or to the scale-out fabric if the destination xPU is in a different group (destination scale-up network is different from the scale-up network of the xPU).

In such computing architectures, sending data to the scale-out network may include communicating with a NIC over a PCIe interface. Such embodiments may require additional hardware and may introduce complexities including, but not limited to, increased total cost of ownership (TCO), higher power consumption, management overhead, and numerous potential failure points.

Additionally, contemporary scale-up networks may be vendor dependent. Non-limiting examples including NVIDIA^{®} NVLink or AMD^{®} XGMI. An objective of the UALink consortium may include establishing a vendor-neutral specification in response to the currently vendor-specific solutions. Regardless of the scale-up fabric, contemporary networks may implement a network wherein each xPU needs to access a NIC, for example, over a PCIe interface, to connect to a scale-out network.

Embodiments of methods and devices for network computing described herein may be directed toward a solution for removing a need for each accelerator to have access to a NIC (e.g., communicatively coupled to a NIC) and for managing data routing within a computing network. The embodiments can include a NIC-less scale-up architecture design that can eliminate a need for xPUs to determine whether they need to communicate over a scale-up network, e.g., using UAL, or a scale-out network, e.g., over PCIE with a UEC-compatible NIC. Based on such a solution, xPU-to-xPU communication may be seamless regardless of xPU location.

According to some embodiments of the methods and devices described herein, xPUs can use, e.g., communicate using, a scale-up network or a scale-up communication protocol only. In such embodiments, the xPU, which may be a source xPU, may not be aware of whether another xPU, e.g., a destination xPU, to which the source xPU is communicating is part of a scale-up or scale-out network. In some embodiments, an xPU can contain a UAL device for coupling communicatively to a UAL switch. The UAL switch can be configured to couple communicatively to a scale-out network and to transmit or receive messages using a scale-out protocol. Example scale-out protocols can include remote direct memory access (RDMA), which can include a UET protocol or a RDMA over Converged Ethernet (RoCE) protocol. The design approach of such embodiments can be transparent to underlying xPUs, which can be useful for simplifying networking architecture while maintaining high performance and scalability.

In some embodiments, a portion of logic, e.g., logic for determining if a message is transmitted to a scale-up or scale-out network, can reside in a UAL switch, which can convert UAL commands into UET packets. As described herein, example embodiments of methods and devices for a UAL switch to handle such communication can be directed toward proxying of scale-up commands, e.g., UAL commands, using scale-out packets or messages, e.g., UET or RDMA packets.

While UAL is used as an example embodiment of a scale-up protocol and UET is used as an example embodiment of a scale-out protocol, it should be understood that other scale-up and scale-out communication protocols may be implemented, including ethernet for scale-up networking (ESUN) and RDMA over Converged Ethernet (RoCE) as non-limiting examples.

### Scale-up Switch Proxy

According to some embodiments, a scale-up switch, e.g., a UAL switch, can implement a protocol for communication over a scale-out network, e.g., using UET. The scale-up switch can comprise a scale-out interface using which the scale-up switch can communicate with scale-out peer devices. Embodiments of methods and devices described herein can be directed to a scale-up switch proxy, which can manage connections and memory mappings for a scale-out network. For example, when a UAL packet arrives at a UAL switch, the UAL switch can decide whether the UAL packet should be forwarded internally (e.g., within a scale-up network) or externally (e.g., within a scale-out network). If external forwarding is required, the scale-up switch can prepare a corresponding UET command to fulfill the UAL command and can send the UET command to a remote UET peer over a UET interface of the UAL switch.

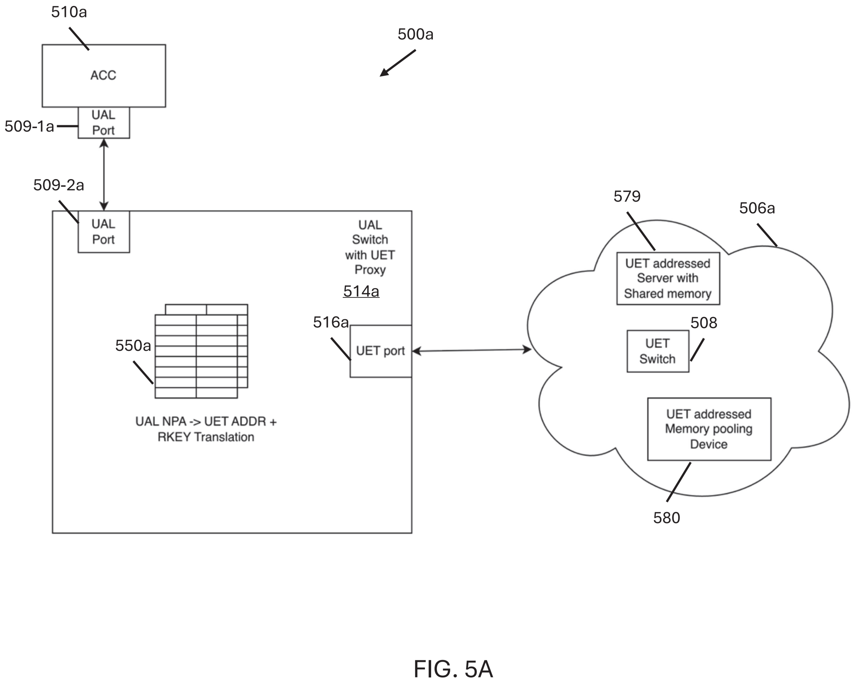

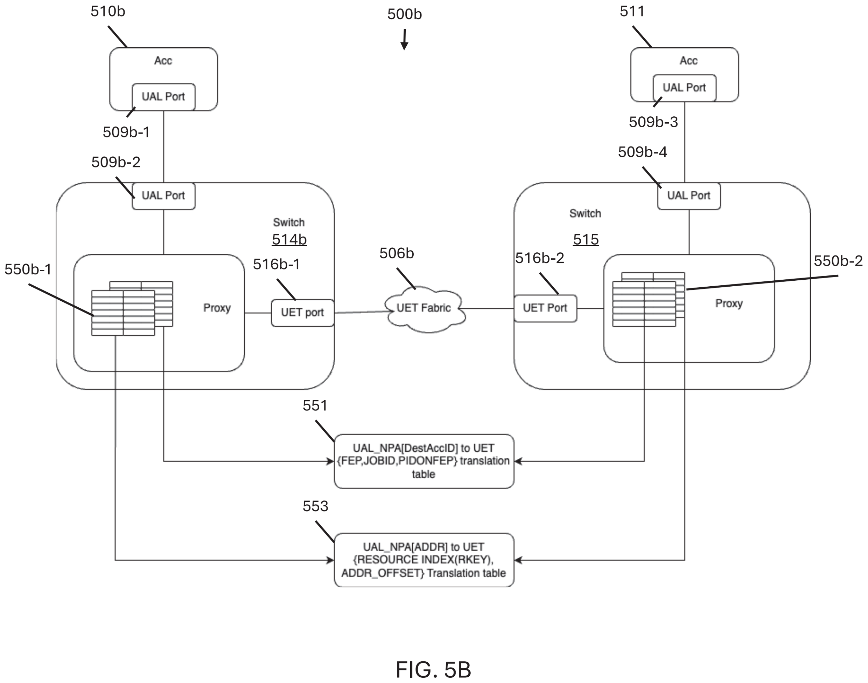

According to some embodiments, for example, embodiments wherein a scale-out network utilizes a UET protocol, compute components of a computing network can expose a portion of memory of the compute component to a UET fabric of a UET network as defined within the UET Specification. In such embodiments, which are further described hereinbelow with reference to FIG. 5, the UET fabric can perform operations directly on the memory exposed of the compute components, e.g., an accelerator such as a GPU or TPU.

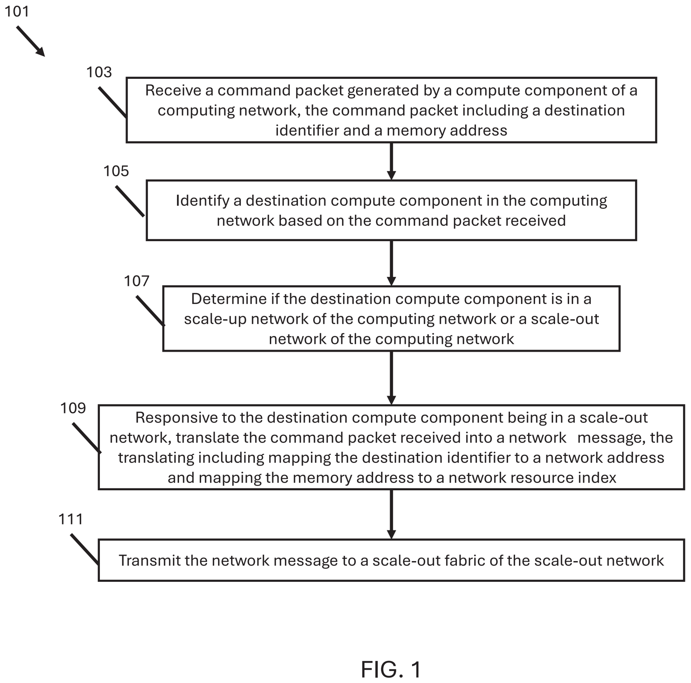

FIG. 1 illustrates a flow chart of an example embodiment of a method 101 of communication in a computing network. The method 101 may be performable by a scale-up switch and comprises receiving 103 a command packet generated by a compute component of a computing network. The compute component can be communicatively coupled to the scale-up switch. The method further comprises identifying 105 a destination compute component in the computing network based on the command packet received and determining 107 if the destination compute component is in a scale-up network of the computing network or a scale-out network of the computing network. The method further comprises, responsive to the destination compute component being in the scale-out network, embedding 109 the command packet received in a network message and transmitting the network message to a scale-out fabric of the scale-out network.

Another example embodiment within a context of a computing network can comprise the following:
1. UAL Command Creation: An xPU can generate a UAL command, which can include request, response, read, or write commands as non-limiting examples.
2. The UAL command can be sent to a UAL switch.
3. The UAL switch can determine whether a command destination of the UAL command is within a scale-up fabric (e.g., scale-up network) or needs to be sent out to the scale-out fabric (e.g., a scale-out network). If the UAL command is intended for a xPU within the scale-up fabric, the UAL command can be forwarded as is. The following steps can explain a process for the UAL switch to handle communication if the UAL switch detects that the UAL command is intended for an xPU outside the scale-up fabric. The UAL switch can transmit the UAL command to the scale-out network, which can be referred to as a Transmit Path.
4. Transmit Path - The command destination of a scale-up command, such as a UAL command, can be referred to as Network Physical Address (NPA) (e.g., UAL NPA). This handle can contain a destination accelerator (DstAccelerator) and an offset within a memory of the destination accelerator. In some embodiments, a UAL switch proxy can map an NPA of a scale-up network to an address in a scale-out network. For example, a UAL NPA can be mapped to a UET address (UET ADDR) and the offset (which can be referred to as a UAL address, UAL ADDR) can be mapped to a remote memory address. The remote memory address can be an offset within a memory region and, for the example of UET, can include an R-Key and an address offset (addr_offset). Such a mapping is further described hereinbelow with respect to steps 4a and 4b.
a. The UAL switch can maintain a mapping between DstAccelerator used by a UAL protocol, to a UET_ADDR used by the UET protocol. As a non-limiting example, such a mapping can be performed using an external management system and a discovery protocol. An example mapping is provided hereinbelow with respect to Table 1. As shown in Table 1, the UET ADDR can comprise a destination fabric endpoint (FEP) address (DEST_FEP_ADDR), a job identifier (JOB_ID), and a process identifier on a fabric endpoint (PID_ON_FEP).

**Table 1. UAL Destination Accelerator to UET Address Mapping**

| ***UAL DstAccelerator*** | ***UET_ADDR*** |
|---|---|
| UAL_NPA {dst_acc_id=11} | {DST_FEP_ADDR, JOB_ID, PID_ON_FEP} |
| | 19.168.10.3, 4, 3 |
| UAL_NPA {dst_acc_id=12} | {DST_FEP_ADDR, JOB_ID, PID_ON_FEP} |
| | 19.168.10.5, 4, 2 |
| UAL_NPA {dst_acc_id=13} | {DST_FEP_ADDR, JOB_ID, PID_ON_FEP} |
| | 19.168.10.3, 4, 2 |

b. The UAL switch can maintain a mapping between the UAL Address, which can include a UAL Protocol Request Address, to a UET Resource index (remote memory key) and address offset per accelerator id. The input to the mapping can be an offset from a base address of the accelerator. Example embodiments of mapping of a UAL Address to a UET Remote Memory Address are further described in Table 2.

**Table 2. UAL Address to UET Remote Memory Address Mapping**

| UAL Address | UET Remote Memory Address |
|---|---|
| UAL_NPA{addr} | {R-KEY = 15, addr offset} |
| UAL_NPA{addr} | {R-KEY = 17, addr offset} |

c. The UAL switch can identify a command issued in the command packet by the UAL protocol and can translate the command issued into a UET command. Example embodiments of mapping of commands are further described in Table 3.

**Table 3. UAL Command to UET Command Mapping**

| ***UAL Command*** | ***UET Command*** |
|---|---|
| Read | UET_READ |
| Write | UET_WRITE |
| Atomic | UET_ATOMIC |

d. Once the UAL switch determines the UET destination address, Remote Memory Key, and Command, the UAL switch can prepare and submit the UET command necessary over a UET interface.
5. Receive Path
a. Once a destination UAL switch receives a UET packet, the destination UAL switch can determine whether it is a response or request. The UAL switch can also function as a destination UAL switch and vice versa based on a source of a packet and a type of a packet, as further described hereinbelow. If the UET packet is a response, the destination UAL switch can complete the UAL command which was issued in 4.3. If the UET packet is a request, the UAL switch can perform a translation based on the mapping tables above. The mappings can be one-to-one.
b. Once the UAL switch determines the destination accelerator (based on a destination accelerator identifier, dst_ace_id), Memory Offset (UAL Address), and Command, the UAL switch can issue the UAL command towards the destination accelerator.

As described hereinabove, a given scale-up switch, e.g. a UAL switch, can perform functions of a transmit path and a receive path. According to some embodiments, for the transmit path, the UAL switch can receive a UAL command from an accelerator within a scale-up network of the UAL switch. For the receive path, the UAL switch can receive a UET packet from a UET fabric of a scale-out network.

According to some embodiments, a UAL proxy over UET can comprise mapping memory of xPUs to memory regions accessible in a scale-out network. In some embodiments, the UAL switch can perform the mapping of the memory of the xPUs. In other embodiments, the memory mapped can be accessible from accelerators in a scale-out network, e.g., via a scale-out fabric. According to some embodiments, this mapping can be achieved by defining a remote memory key (R-Key), as described hereinabove with respect to Table 2. The R-Key can comprise a remote memory key per xPU memory exposed. The R-Key can be exposed either by initial connection setup parameter exchange or by an external management system.

In an example embodiment, the memory mapped from an xPU can be exposed over a UET fabric using protocols defined by the UET Specification. In some embodiments, the memory mapped may not be associated with a compute component. Restated, memory may be accessible by the fabric for performing an operation, e.g., a read, write, or atomic operation as non-limiting examples. The memory may or may not be associated with a compute component or another component of the computing network. Furthermore, the memory can be mapped to correspond with a scale-up address. As described hereinabove with respect to Tables 1 and 2, a UAL destination identifier can be mapped to a UET address, JOB_ID, and PID_ON_FEP, or vice versa, and a UAL memory address can be mapped to a UET resource index and address offset, or vice versa. In some embodiments, a scale-up switch, e.g., a UAL switch, can perform the mapping. In such a way, a UAL command can be generated for an operation on a UAL NPA. The operation of the UAL command can be carried out by the UET fabric after translation of the UAL command into a UET fabric.

According to some embodiments, a receive path can comprise a UAL switch receiving a scale-out network response message. The UAL switch can attempt to identify a scale-up accelerator identifier (e.g., DstAccid) based on parameters of the scale-out network response message, e.g., using one or more of the UET address, JOB_ID, and PID_ON_FEP. The UAL switch can identify the scale-up accelerator identifier using the tables described hereinabove. Once a scale-up accelerator identifier has been identified and given that the scale-up accelerator identifier is within a scale-up network of the UAL switch, the UAL switch can format an appropriate scale-up message response and send the scale-up message response to a scale-up accelerator associated with the scale-up accelerator identifier.

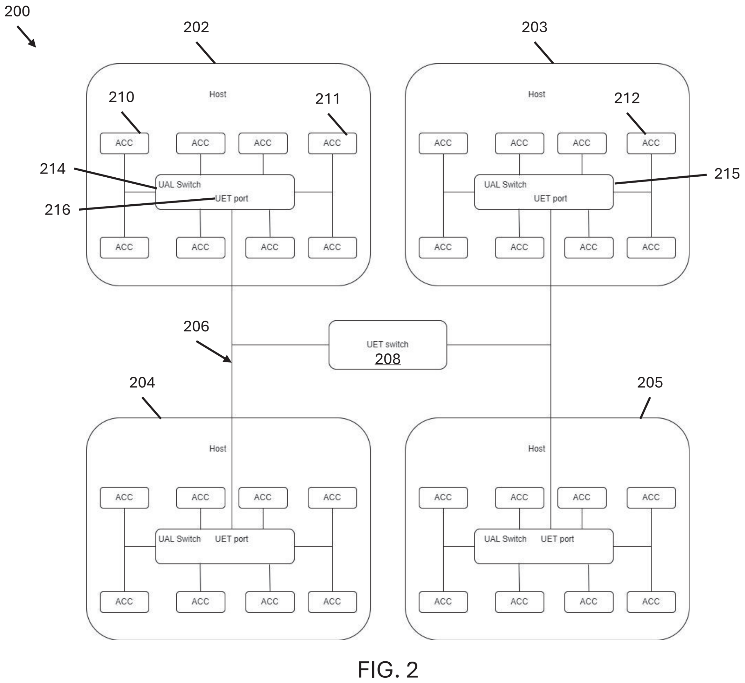

FIG. 2 illustrates an example embodiment of a computing network 200. The computing network 200 can include scale-up networks 202-205. The scale-up networks 202-205 can be communicatively interconnected by a scale-out fabric 206, which may include a scale-out switch 208. In some embodiments, the scale-out switch 208 may be configured to communicate using a UET protocol, in which the scale-out switch may be a UET switch. In other embodiments, the scale-out switch 208 can implement other protocols, including an RDMA protocol such as an RDMA over Converged Ethernet (RoCE) protocol. In some embodiments, the scale-out fabric 206 may include one or more of the scale-out switch 208 communicatively interconnected.

A scale-up network, for example, the scale-up network 202, can include one or more accelerators, e.g., the accelerators 210, 211, which may include GPUs or TPUs as non-limiting examples. The accelerators, including the accelerators 210, 211, can be configured to couple communicatively to a scale-up switch, which can include a UAL switch 214 configured to communicate with the accelerators 210 of the scale-up network 202 using a UAL protocol. The UAL switch 214 can further be configured to couple communicatively with the scale-out fabric 206 via a port, e.g., the UET port

In some embodiments, logic regarding handling a message from an accelerator may be handled by the UAL switch 214. For example, the accelerator 210 may transmit a message to another accelerator within the computing network 200. The UAL switch may be configured to receive the message, which can be a scale-up message formatted in, for example, a UAL protocol, from the accelerator 210 and to determine handling of the message based upon a destination accelerator of the message. For example, if the destination accelerator is in the scale-up network 202 of the accelerator 210, e.g., the accelerator 211, the UAL switch 214 may be configured to transmit the message to the accelerator 211 using the UAL protocol. Alternatively, if the destination accelerator is in the scale-up network 203, e.g., the accelerator 212 of the scale-up network 203, the UAL switch 214 may be configured to convert the scale-up message to a scale-out message and to transmit the message to the scale-out fabric 206. The UET fabric 206 can route the message to the accelerator 212 via a destination scale-up switch, e.g., the UAL switch 215.

In such embodiments, a burden of facilitating communication within a computing network can be shifted from the accelerators and handled, for example, by a scale-up switch. Additionally, in such embodiments, only scale-up switches, e.g., the scale-up switches 214, 215, can go out to a network (e.g., the scale-out fabric 206). Each accelerator, e.g., the accelerators 210-212, may not require its own NIC for scale-out communication.

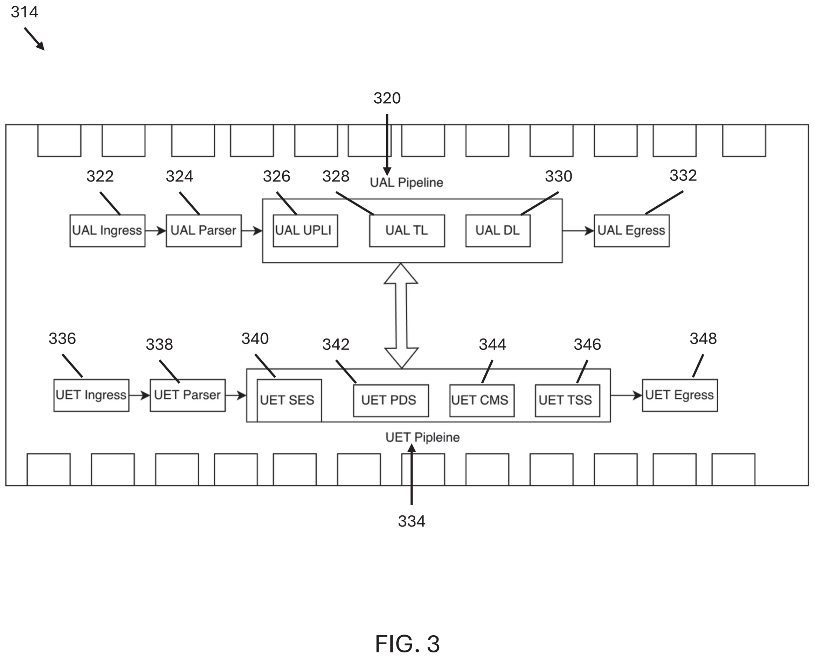

FIG. 3 is a block diagram of an example embodiment of a scale-up switch 314. As described hereinabove, the scale-up switch 314 can be communicatively coupled to one or more accelerators and can be configured to receive messages from and transmit messages to the one or more accelerators, wherein the messages can be formatted, for example, using a UAL protocol. The scale-up switch 314 can also be communicatively coupled to a UET fabric and can be configured to receive and transmit messages to the scale-out fabric, wherein the messages can be formatted using, for example, a UET protocol.

As illustrated in FIG. 3, a UAL pipeline 320 of the scale-up switch 314 can include a UAL ingress 322 and a UAL parser 324 configured to receive and to parse a UAL message, respectively. UAL may comprise a protocol stack with one or more layers and the scale-up switch may be configured to generate or process messages, e.g., the UAL message, at the one or more layers. Example embodiments of layers can include a protocol layer, e.g., UAL Protocol Level Interface (UPLI) 326, a transaction layer (TL), e.g., a UAL TL 328, and a data link layer (DL), e.g., a UAL DL 330. The UAL message can subsequently exit the scale-up switch at a UAL egress 332.

According to some embodiments wherein the scale-up switch is configured to use a UAL protocol stack, the UAL UPLI 326 may provide, for example, read, write, and atomic memory operators, for non-limiting example. The UAL TL 328 may handle connections between two UPLI interfaces, which may include a UPLI originator and a UPLI completer, and may handle packing and unpack of TL flits. The UAL DL 330 may handle transfer of data between the TL and a physical layer (PL) used for transfer of signals.

The scale-up switch 314 of FIG. 3 can further include a scale-out pipeline, which may include a UET pipeline 334 for a scale-up switch configured to receive and transfer messages formatted using a UET protocol. The UET pipeline 334 can include a UET ingress 336 and a UET parser 338 configured to receive and to parse a UET message, respectively. The scale-up switch 314 can be configured to generate or process messages, e.g., the UET message, at one or more sublayers. UET can define sublayers within a transport layer of network communication and the sublayers can comprise a semantics sublayer (SES) 340, packet delivery sublayer (PDS) 342, congestion management sublayer (CMS) 344, and transport security sublayer (TSS) 346. The UET message can subsequently exit the scale-up switch at a UET egress 348.

According to some embodiments wherein the scale-up switch 314 is configured to use a UET protocol stack, the SES 340 can define addressing, authorization, message types, protocols, and semantic header formats between endpoints as non-limiting examples. In such embodiments, the SES 340 can operate at a level of transactions, which can include messages or remote memory access (RMA). The SES 340 can further break message or RMAs into packets for transmission via the PDS 342. The PDS 342 can transport the packets to a destination fabric end point (FEP) and can pass them to a target SES of the end point for processing. The CMS 344 can handle transmission of the packets such the packets are transmitted at a highest rate while minimizing network congestion. The TSS 346 can be useful for defining scalable encryption and authentication mechanisms.

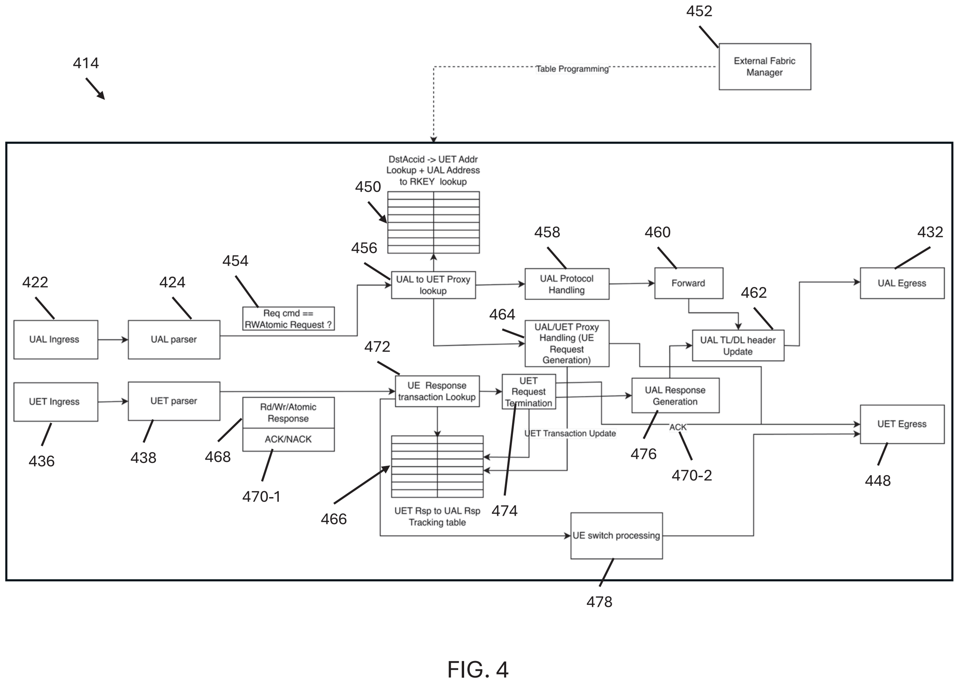

FIG. 4 illustrates a block diagram of an example embodiment of a scale-up switch 414 that can be used for communication in a computing network. The scale-up switch 414 can be configured to process scale-up messages using a UAL protocol and scale-out messages using a UET protocol. In some embodiments, the scale-up switch 414 can be a UAL switch. The scale-up switch can be configured to transmit a scale-up message to a scale-out network using a scale-up switch proxy.

A UAL message (which may also be referred to herein as a UAL packet or UAL command) received by the scale-up switch 414 can arrive at a UAL ingress 422 and be parsed at a UAL parser 424. The UAL message can be a message sent to the scale-up switch 414 by an accelerator communicatively coupled thereto. The scale-up switch 414 can be configured to perform a verification 454 that a command of the UAL message comprises a read, write, or atomic request as non-limiting examples. The scale-up switch 414 can be further configured to perform a UAL to UET Proxy lookup 456, which can include referencing a lookup table 450 mapping destination accelerator identifiers to UET addresses. The lookup table 450 can be programmed by an external fabric manager 452.

The UAL to UET Proxy lookup 456 can determine whether a destination compute component of the UAL message is in a scale-up network or a scale-out network. For example, the lookup table 450 can indicate whether a destination accelerator id (DstAccid) is associated with a UET address (UET Addr) or whether a DstAccid belongs to a scale-up network as non-limiting examples. Based on the UAL to UET Proxy Lookup and responsive to the destination compute component being in the scale-up network, the UAL message can proceed to UAL Protocol Handling 458, Forwarding 460, and UAL TL/DL Header Updating 462 prior to leaving the UAL switch at a UAL egress 432. The UAL message can be transmitted from the UAL egress to the destination compute component.

Based on the UAL to UET Proxy Lookup and responsive to the destination compute component being in the scale-out network, the UAL message can proceed to UAL/UET Request Handling 464, which can also be referred to as UE Request Generation. A UET packet can be generated based on the UAL message, for example, as described hereinabove. For example, UET packet can comprise a UET Address based on the UAL DstAccid and a UET Remote Memory Address based on a UAL Address. The UAL/UET Proxy Handling 464 can further include converting a UAL command to a UET command based on a UET Response to UAL Response Tracking Table 466. The UET packet generated can proceed to a UET Egress 448 to be transmitted to a UET fabric of a scale-out network.

A UET message (which may also be referred to herein as a UET packet) received by the scale-up switch 414 can arrive at a UET ingress 436 and be parsed at a UET parser 438. The scale-up switch 414 can be configured to perform a verification 468 that the UET message comprises, for example, a read, write, or atomic response as non-limiting examples and to provide an acknowledge/not acknowledge (ACK/NACK) 470-1 of the UET message. The UET packet can proceed to an Ultra Ethernet (UE) Response Transaction Lookup 472, which can reference the UET Response to UAL Response Tracking Table 466. Based on the UE Response Transaction Lookup 472 and responsive the destination compute component of the UET packet being in a scale-up network of the scale-up switch 414, the UET packet message can proceed to UET Request Termination 474. A UAL Response Generation 476 can be performed to generate a UAL command based on one or more of the UET message, the lookup table 450, and the Tracking Table 466. The UAL command can proceed to the UAL TL/DL Header Update 462 and UAL Egress 432 to be transmitted to a destination accelerator of a scale-up network of the scale-up switch 414. The scale-up switch 414 can also send an ACK 470-2 of the UET message via the UET Egress 448, for example, to a scale-up switch that sent the UET message.

Based on the UE Response Transaction Lookup 472 and responsive to the destination compute component being in the scale-out network of the scale-up switch 414, the UET message can undergo UE Switch Processing 478 and transmitted to the UET fabric via the UET Egress 448.

FIG. 5A illustrates a block diagram of an example computing network 500a that can include an example embodiment of a scale-up switch 514a configured for communicating in the computing network 500a. The computing network 500a can include an accelerator 510a communicatively coupled to the scale-up switch 514a via scale-up ports, e.g., UAL ports 509-1a, 509-2a. The scale-up switch 514a can be configured to proxy a scale-up command through a scale-out network, e.g., a UAL command through a UET network proxy. The scale-up switch 514a can be configured to maintain a table 550a mapping UAL parameters to UET parameters. As non-limiting examples, the scale-up switch 514a can use the table 550a to map a UAL NPA to a UET Address and UET Remote Memory Key. The scale-up switch 514a can comprise a UET port 516a for coupling communicatively to a UET fabric 506a, which can comprise one or more UET switches 508.

The UET fabric 506a can comprise a UET Addressed Server with Shared Memory 579 and a UET Addressed Memory Pooling Device 580. In some embodiments, a UET memory pooling device, for example, the UET Addressed Memory Pooling Device 580, can be a device for providing memory pooling services to a UET fabric. The UET Addressed Server with Shared Memory 579 can include memory shared to the scale-out network by individual accelerators of the computing network. The UET fabric can execute a command of a UET packet received from the scale-up switch 514 by writing or reading from memory shared by the accelerators, e.g., using the UET Addressed Server with Shared Memory 581. The UET Addressed Memory Pooling Device 580 can provide pooled memory for the UET fabric for purposes such as, as non-limiting examples, managing connection resources or states and buffer resources for communication.

FIG. 5B illustrates a block diagram of another example computing network 500b that can include example embodiments of scale up switches 514b, 515 configured for communicating in the computing network 500b. The computing network 500b can include the scale-up switches 514b, 515 communicatively coupled to respective accelerators 510b, 511 within a scale-up network of each respective scale-up switch 514b, 515 and to a scale-out fabric 506b (e.g., a UET fabric). The scale-up switch 514b can be communicatively coupled to the accelerator 510b via scale-up ports (e.g., UAL ports 509b-1, 509b-2) and the scale up switch 515 can be communicatively coupled to the accelerator 511 via scale-up ports 509b-3 and 509b-4. The scale-up switches 514b, 515 can be connected to the UET fabric 506b via respective scale-out ports 516b-1, 516b-2 (which can be UET ports).

The scale-up switches 514b, 515 can be configured to maintain tables 550b-1, 550b-2 for mapping a scale-up command (e.g., a UAL command) to a scale-out packet (e.g., a UET packet). In some embodiments, the tables 550b-1, 550b-2 can comprise a destination address translation table 551, which can map a UAL_NPA[DestAccid] to a UET{FEP, Jobid, PidonFep}. Similar translations are described hereinabove with respect to Table 1. The tables 550b-1, 550b-2 can further comprise a memory offset translation table 553, which can map a UAL_NPA[ADDR] to a UET {Resource Index(R-Key), Addr_Offset}. Similar translations are described hereinabove with respect to Table 2. Translation of a UAL command to a scale-out packet using the tables 550b-1, 550b-2 can enable communication between scale-up switches 514b, 515 of different scale-up networks over a scale-out fabric 506b (e.g., the UET fabric) using a proxy.

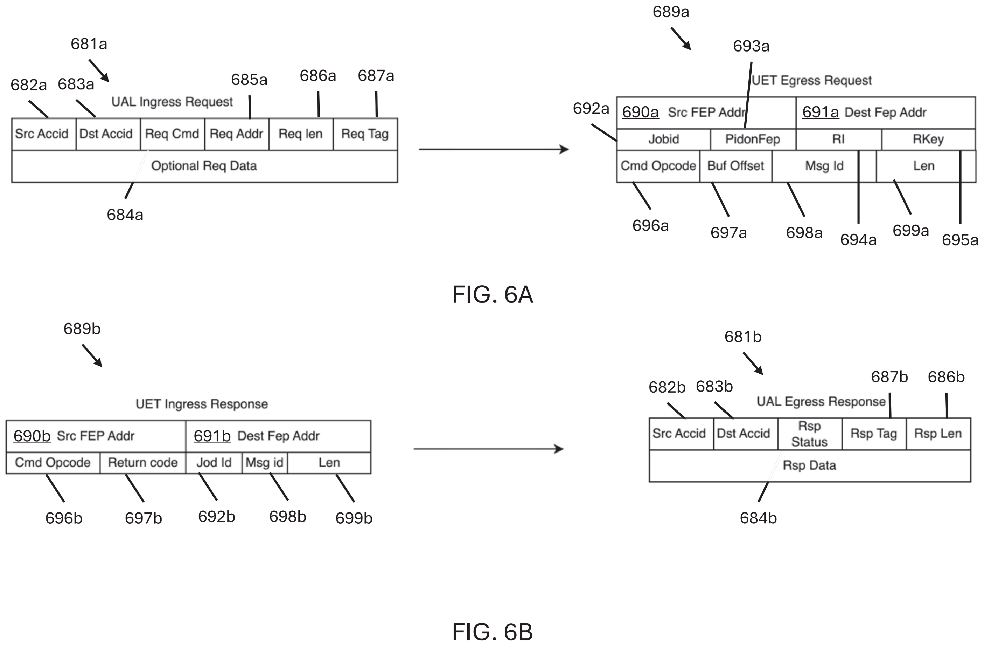

FIGS. 6A and 6B illustrate example embodiments of mapping between a UAL command a UET packet and between a UET packet and a UAL command, respectively. As described hereinabove, UAL command can be an example of a scale-up command and the UET packet can be an example of a scale-out packet. Other communication protocols can be used for scale-up and scale-out communication.

FIG. 6A illustrates a mapping of a scale-up command (UAL command) 681a to a scale-out packet (UET packet) 689a. The UAL command 681a, which can be a UAL request that arrives at a UAL ingress of a UAL switch (for example, the UAL Ingress 322, 422 described herein with respect to FIGS. 3 and 4, respectively) can comprise fields such as source accelerator identifier (Src Accid) 682a, destination accelerator identifier (Dest Accid) 683a, Request Command (Req Cmd) 685a, Request Address (Req Addr) 685a, Request Length (Req Len) 686a, and Request Tag (Req Tag) 687a as non-limiting examples. The UAL command 681a can further comprise an Optional Request Data field 688a.

The Src Accid 682a and Dest Accid 683a can be identifiers for a source accelerator (i.e., an accelerator generating the UAL command 681a) and a destination accelerator (i.e., a target accelerator of the UAL command 681a), respectively. The Req Addr 685a can indicate an address (e.g., a memory address) of an operation of the UAL command indicated by the Req Cmd 684a. The Req Len 686a can provide a length of the UAL command and the Req Tag 687a can facilitate tracking or managing a UAL transaction. While an example embodiment of a UAL command is presented herein, it should be understood that alternative UAL commands, for example, those described within the UAL Specification, can also be used.

The UET packet 689a mapped from the UAL command 681a can comprise a source fabric endpoint (FEP) address (Src FEP Addr) 690a, a destination FEP address (Dest FEP Addr) 691a, a Job Identifier (Jobid) 692a, a Process Identifier on an FEP (PidonFep) 693a, a Resource Index (RI) 694a, an R-Key 695a, a Command Operation Code (Cmd Opcode) 696a, a Buffer Offset 697a, a Message Identifier (Msg Id) 698a, and a Length (Len) 699a as non-limiting examples.

The Src FEP Addr 690a and the Dest FEP addr 691a can include UET addresses for the source and destination accelerators, respectively, as described hereinabove. The Jobid 692a and the PidonFep 693a can be useful for, for example, parallel communication over a scale-out network. In some embodiments, the Jobid 692a can identify a job, which may include a parallel job, within a cluster or a fabric, e.g., the scale-out fabric, uniquely and can be used for addressing or authorization purposes. The PidonFep 693a can be an identifier of a process associated with a FEP numbered from 0 to a number of processes minus one (P - 1). The RI 694a can identify resources within a process, such as a service or library as non-limiting examples. The R-Key 695a can define a memory region that may be, for example, a target of a command associated with the UET packet. The Cmd Opcode 696a can define an operation to be performed, for example, a read, write, or atomic operation as non-limiting examples. The Buffer Offset 697a can indicate an offset within a buffer memory at a given address for performing the operation indicated by the Cmd Opcode 696a. The Msg Id 698a can assist in associating different to one message at a target (e.g., a destination scale-up switch receiving the UET packet 689a), for example, for multiplexed messages. The Len 699a can define a length of data within, for example, an optional data field (not shown). While an example embodiment of a UET packet is presented herein, it should be understood that alternative UET packets, for example, those described within the UET Specification, can also be used.

FIG. 6B illustrates a mapping of a scale-out packet (UET packet) 689b to a scale-up command (UAL command) 681b. The UET packet 689b can be a UET packet that arrives at a UET ingress of a UAL switch (for example, the UET Ingress 336, 436 described herein with respect to FIGS. 3 and 4, respectively). The UET packet 689b can be similar to the UET packet 689a of FIG. 6A but can include response header fields. For example, the UET packet 689b can comprise a Src FEP Addr 690b, a Dest FEP Addr 691b, a Cmd Opcode 696b, a Jobid 692b, a Msg Id 698b, and a Len 699b, which can be similar to the corresponding fields of the UET packet. The UET packet 689b can further comprise a Return code 697b, which can indicate success conditions or error conditions. In some embodiments, fields such as the Jobid 692b and the Msg Id 698b can include the Jobid 692a or the Msg id 698a of the original request (e.g., of the UET packet 689a of FIG. 6A).

The UET packet 689b can be mapped to the UAL command 681b for transmission to a destination compute component at a UAL egress. The UAL command 681b can comprise a Src Accid 682b and Dest Accid 683b. The UAL Command can further comprise a Response Status (Rsp Status) 684b, a Response Tag (Rsp Tag) 687b, a Response Length (Rsp Len) 686b, and Response Data (Rsp Data) 688b. The Rsp Status 684b can be an indicator of a status of a response, e.g., a success or failure, associated with a request or operation, e.g., a read or write operation, and the Rsp Tag 687b can uniquely identify a given request among outstanding requests. In some embodiments, the Rsp Tag 687b can identify a response authentication tag that can associate a response with a request. The Rsp Len 686b can indicate a length of data in the Rsp Data field 688b. While example UET packets and UAL commands are provided herein in with respect to FIG. 6B, particularly with respect to responses using UET and UAL, it should be understood that other communication protocols may be used for communicating in a computing network.

Embodiments of methods and devices can be advantageous for communication in a computing network by removing a need for a NIC per xPU inside a scale-up system, by reducing cost of an overall system, or by simplifying xPU connectivity by eliminating a need to choose between sending data over scale-up (e.g., UAL) or scale-out communication (e.g., PCIE), among other benefits.

The teachings of all patents, published applications and references cited herein are incorporated by reference in their entirety.

While example embodiments have been particularly shown and described, it will be understood by those skilled in the art that various changes in form and details may be made therein without departing from the scope of the embodiments encompassed by the appended claims.
The following is a list of further preferred embodiments of the invention:
1. A method of communicating in a computing network, the method comprising:
   by a scale-up switch:
      receiving a command packet generated by a compute component of a computing network, the compute component communicatively coupled to the scale-up switch, the command packet including a destination identifier and a memory address;
      identifying a destination compute component of the computing network based on the command packet received;
      determining if the destination compute component identified is in a scale-up network of the computing network or a scale-out network of the computing network of the computing network; and
      responsive to the destination compute component being in the scale-out network:
         translating the command packet received into a network message, the translating including mapping the destination identifier to a network address and mapping the memory address to a network resource index; and
         transmitting the network message to a scale-out fabric of the scale-out network, the scale-out fabric communicatively coupled to the scale-up switch.
2. The method of Embodiment 1, further comprising:
   by the scale-up switch:
   responsive to the destination compute component being in the scale-up network, transmitting the command packet to the destination compute component.
3. The method of Embodiment 1, further comprising:
   by the scale-up switch, maintaining a mapping table, the mapping table enabling the mapping of the destination identifier to the network address and of the memory offset to the network resource index.
4. The method of Embodiment 1, further comprising:
   by a destination scale-up switch:
   receiving the network message from the scale-out fabric;
   mapping the network address to the destination identifier and the network resource index to the memory address; and
   performing an operation associated with the local identifier and the local address mapped.
5. The method of Embodiment 1, wherein the network address and the network memory key are associated with memory accessible by the scale-out fabric.
6. The method of Embodiment 5, further comprising, by the scale-out fabric, executing an operation on the memory accessible by the scale-out fabric, the operation based on a portion of the network message transmitted.
7. The method of Embodiment 5, further comprising, by the scale-out fabric, transmitting the network message to a destination compute component of the computing network via the memory accessible by the scale-out fabric.
8. The method of Embodiment 1, wherein the network address includes one or more of an endpoint address, a job identifier, and a process identifier, and wherein the network resource index includes one or more of a remote memory key and a memory offset.
9. The method of Embodiment 1, wherein the command packet further includes a command and the network message further includes a network command, and wherein translating the command packet into the network message further includes mapping the command to the network command.
10. The method of Embodiment 1, wherein:
   the network message is formatted using a remote direct memory access (RDMA) protocol, the RDMA protocol including an ultra ethernet transport (UET) protocol or an RDMA over Converged Ethernet (RoCE) protocol.
11. The method of Embodiment 1, wherein:
   the command packet is formatted using an ultra accelerator link (UAL) protocol or an ethernet for scale-up networking (ESUN) protocol.
12. A scale-up switch comprising:
   a processor configured to couple communicatively to a compute component of a scale-up network and to a scale-out fabric of a scale-out network, the scale-up network and the scale-out network being part of a computing network, the processor further configured to:
   receive a command packet generated by the compute component, the command packet including a destination identifier and a memory address;
   identify a destination compute component of the computing network based on the command packet received;
   determine if the destination compute component is in a scale-up network or the scale-out network; and
   responsive to the destination compute component being in the scale-out network:
      translate the command packet received into a network message, the translating including mapping the destination identifier into a network address and mapping the memory offset to a network resource index; and
      transmit the network message to the scale-out fabric.
13. The scale-up switch of Embodiment 12, further comprising:
   memory communicatively coupled to the processor, the memory configured to maintain a mapping table, the mapping table enabling the mapping of the destination identifier to the network address and of the memory offset to the network resource index, wherein the network address includes one or more of an endpoint address, a job identifier, and a process identifier, and wherein the network resource index includes one or more of a remote memory key and a memory offset.
14. The scale-up switch of Embodiment 12, wherein the processor is further configured to:
   responsive to the destination compute component being in the scale-up network, transmit the command packet to the destination compute component.
15. The scale-up switch of Embodiment 12, wherein the command packet received further includes a command and wherein translating the command packet into the network message further includes mapping the command of the command packet into a network command.
16. The scale-up switch of Embodiment 12, wherein the scale-up switch is further configured to:
   receive an inbound message from the scale-out fabric and to perform an operation based on the inbound message received.
17. The scale-up switch of Embodiment 16, wherein the processor is further configured to:
   translate the inbound message received, wherein translating the inbound message received includes mapping an address of the inbound message to a local identifier and mapping a resource index of the inbound message to a local address, and wherein the operation performed is based on the local identifier and the local address mapped.
18. The scale-up switch of Embodiment 17, wherein the operation performed comprises:
   transmitting a representation of the inbound message translated to a destination compute component of the scale-up network, the destination compute component based on the local identifier and the local address mapped.
19. A hardware description language (HDL) design structure encoded on a machine readable data storage medium, said HDL design structure comprising elements that when processed in a computer-aided design system generates a machine-executable representation of a scale-up switch, wherein the HDL design structure comprises:
   a first communication module configured to couple communicatively to a compute component of a scale-up network, the scale-up network being part of a computing network;
   a second communication module configured to couple communicatively to a scale-out fabric of a scale-out network, the scale-out fabric being part of the computing network; and
   a processing module communicatively coupled to the first communication module and the second communication module, the processing module configured to:
      receive a command packet generated by the compute component, the command packet including a destination identifier and a memory address;
      identify a destination compute component of the computing network based on the command packet received;
      determine if the destination compute component is in the scale-up network or the scale-out network; and
      responsive to the destination compute component being in the scale-out network:
         translate the command packet received into a network message, the translating including mapping the destination identifier into a network address and mapping the memory offset to a network resource index; and
         transmit the network message to the scale-out fabric.
20. The HDL design structure of Embodiment 19, further comprising:
   a memory block communicatively coupled to the processing module, the memory block configured to maintain a mapping table, wherein the processing module is configured to map the destination identifier to the network address and the memory offset to the network resource index based on the mapping table.

## Claims

1. A method of communicating in a computing network, the method comprising:
by a scale-up switch:
receiving a command packet generated by a compute component of a computing network, the compute component communicatively coupled to the scale-up switch, the command packet including a destination identifier and a memory address;
identifying a destination compute component of the computing network based on the command packet received;
determining if the destination compute component identified is in a scale-up network of the computing network or a scale-out network of the computing network of the computing network; and
responsive to the destination compute component being in the scale-out network:
translating the command packet received into a network message, the translating including mapping the destination identifier to a network address and mapping the memory address to a network resource index; and
transmitting the network message to a scale-out fabric of the scale-out network, the scale-out fabric communicatively coupled to the scale-up switch.

2. The method of Claim 1, further comprising:
by the scale-up switch:
responsive to the destination compute component being in the scale-up network, transmitting the command packet to the destination compute component.

3. The method of Claim 1 or 2, further comprising:
by the scale-up switch, maintaining a mapping table, the mapping table enabling the mapping of the destination identifier to the network address and of the memory offset to the network resource index.

4. The method of one of Claims 1 to 3, further comprising:
by a destination scale-up switch:
receiving the network message from the scale-out fabric;
mapping the network address to the destination identifier and the network resource index to the memory address; and
performing an operation associated with the local identifier and the local address mapped.

5. The method of one of Claims 1 to 4, wherein the network address and the network memory key are associated with memory accessible by the scale-out fabric.

6. The method of Claim 5, further comprising, by the scale-out fabric, executing an operation on the memory accessible by the scale-out fabric, the operation based on a portion of the network message transmitted, or
further comprising, by the scale-out fabric, transmitting the network message to a destination compute component of the computing network via the memory accessible by the scale-out fabric.

7. The method of one of Claims 1 to 6, wherein the network address includes one or more of an endpoint address, a job identifier, and a process identifier, and wherein the network resource index includes one or more of a remote memory key and a memory offset.

8. The method of one of Claims 1 to 7, wherein the command packet further includes a command and the network message further includes a network command, and wherein translating the command packet into the network message further includes mapping the command to the network command.

9. The method of one of Claims 1 to 8, wherein:
the network message is formatted using a remote direct memory access (RDMA) protocol, the RDMA protocol including an ultra ethernet transport (UET) protocol or an RDMA over Converged Ethernet (RoCE) protocol, or
wherein:
the command packet is formatted using an ultra accelerator link (UAL) protocol or an ethernet for scale-up networking (ESUN) protocol.

10. A scale-up switch comprising:
a processor configured to couple communicatively to a compute component of a scale-up network and to a scale-out fabric of a scale-out network, the scale-up network and the scale-out network being part of a computing network, the processor further configured to:
receive a command packet generated by the compute component, the command packet including a destination identifier and a memory address;
identify a destination compute component of the computing network based on the command packet received;
determine if the destination compute component is in a scale-up network or the scale-out network; and
responsive to the destination compute component being in the scale-out network:
translate the command packet received into a network message, the translating including mapping the destination identifier into a network address and mapping the memory offset to a network resource index; and
transmit the network message to the scale-out fabric.

11. The scale-up switch of Claim 10, further comprising:
memory communicatively coupled to the processor, the memory configured to maintain a mapping table, the mapping table enabling the mapping of the destination identifier to the network address and of the memory offset to the network resource index, wherein the network address includes one or more of an endpoint address, a job identifier, and a process identifier, and wherein the network resource index includes one or more of a remote memory key and a memory offset.

12. The scale-up switch of Claim 10 or 11, wherein the processor is further configured to:
responsive to the destination compute component being in the scale-up network, transmit the command packet to the destination compute component, or
wherein the command packet received further includes a command and wherein translating the command packet into the network message further includes mapping the command of the command packet into a network command.

13. The scale-up switch of one of Claims 10 to 12, wherein the scale-up switch is further configured to:
receive an inbound message from the scale-out fabric and to perform an operation based on the inbound message received, and/or
wherein the processor is further configured to:
translate the inbound message received, wherein translating the inbound message received includes mapping an address of the inbound message to a local identifier and mapping a resource index of the inbound message to a local address, and wherein the operation performed is based on the local identifier and the local address mapped, and/or wherein the operation performed comprises:
transmitting a representation of the inbound message translated to a destination compute component of the scale-up network, the destination compute component based on the local identifier and the local address mapped.

14. A hardware description language (HDL) design structure encoded on a machine readable data storage medium, said HDL design structure comprising elements that when processed in a computer-aided design system generates a machine-executable representation of a scale-up switch, wherein the HDL design structure comprises:
a first communication module configured to couple communicatively to a compute component of a scale-up network, the scale-up network being part of a computing network;
a second communication module configured to couple communicatively to a scale-out fabric of a scale-out network, the scale-out fabric being part of the computing network; and
a processing module communicatively coupled to the first communication module and the second communication module, the processing module configured to:
receive a command packet generated by the compute component, the command packet including a destination identifier and a memory address;
identify a destination compute component of the computing network based on the command packet received;
determine if the destination compute component is in the scale-up network or the scale-out network; and
responsive to the destination compute component being in the scale-out network:
translate the command packet received into a network message, the translating including mapping the destination identifier into a network address and mapping the memory offset to a network resource index; and
transmit the network message to the scale-out fabric.

15. The HDL design structure of Claim 14, further comprising:
a memory block communicatively coupled to the processing module, the memory block configured to maintain a mapping table, wherein the processing module is configured to map the destination identifier to the network address and the memory offset to the network resource index based on the mapping table.
